# EUROPEAN PATENT APPLICATION

(11) **EP 2 762 417 A1**
(43) Date of publication of application: **06.08.2014**
(21) Application number: 12837443.6
(22) Date of filing: 11.09.2012
(51) Int. Cl.: B65D 33/02, A44B 19/16, B29C 47/00, B65D 33/25, C08L 23/04

(54) **SHAPE-RETAINING TAPE, ZIPPER TAPE, PACKAGING BAG, METHOD FOR MANUFACTURING SHAPE-RETAINING TAPE, METHOD FOR MANUFACTURING ZIPPER TAPE**

(30) Priority: 30.09.2011 JP 2011216147
(71) Applicant: Idemitsu Unitech Co. Ltd., Tokyo 108-0014 (JP)
(72) Inventor: SAITO, Norito, Sodegaura-shi Chiba 299-0205 (JP); KATADA, Ryo, Sodegaura-shi Chiba 299-0205 (JP); ITO, Shunichi, Sodegaura-shi Chiba 299-0205 (JP); MOGAMI, Michio, Sodegaura-shi Chiba 299-0205 (JP)
(74) Representative: Clarke, Lionel Paul
(86) International application number: PCT/JP2012/005730
(87) International publication number: WO 2013/046562

(57) **Abstract**

Provided are a shape-retaining tape and a zipper tape that can be produced only by extrusion molding without using a stretching process, and can retain a prescribed shape by being attached to a package bag formed of a resin film or the like, and a package bag in which these tapes are attached to an opening part. In a zipper tape 2A having an engagement part in which a protruded male part 12 and a recessed female part 22 are engaged with each other, shape-retaining parts 11b and 21b formed of a resin composition obtained by adding 0.1 to 40 parts by weight of an inorganic filler relative to 100 parts by weight of a high-density polyethylene resin are provided along the tape-length L direction of a male-side belt-like base part 11a and a female-side belt-like base part 21a.

## Description

### Technical Field

The present invention relates to a tape to be attached to a resin film or the like. In particular, the present invention relates to a shape-retaining tape and a zipper tape that can retain the opening part of a package bag in the opened state, a package bag provided with these tapes and a method for producing these tapes.

### Background Art

A container for accommodating contents has conventionally been used. In recent years, a packaging bag produced from a film has come to be used widely.

In such a packaging bag, an opening part for taking contents out of the bag is provided.

In the case of such an opening part, when opened to take contents out of the bag, it immediately returns to its original flat closed state. Therefore, a user is required to open the bag whenever he or she takes out the contents, thereby leading to troublesome handling.

In particular, in the case of a package bag provided with a zipper tape that seals an opening part openably and closably, since it has an engagement part formed of a protruded part and a recessed part that extend on the inner surface of the bag and are engaged with each other, the opened state of the opening part cannot be retained easily even if an external force is applied to the opening part in order to keep the opened state.

Under such circumstances, a package bag capable of being retained with an opening part being in the opened state has been proposed.

Patent Document 1 proposes a technology in which, in a bag-like container having a zipper tape being provided in its opening part, a belt-like shape-retaining element that can be plastically deformed is disposed between a zipper tape base material attached to the opening part and the main body.

This shape-retaining element is produced by a process in which a thermoplastic resin such as a polyolefin-based resin is subjected to extrusion molding in the shape of a belt and then a molded product is stretched under prescribed temperature conditions in order to impart rigidity and plastic deformity.

### Related Art Documents

### Patent Documents

Patent Document 1: JP-A-2003-040290

### Summary of the Invention

### Problems to be Solved by the Invention

However, although the bag-like container disclosed in Patent Document 1 can be retained with its opening part being in the opened state by the shape-retaining element, in order to impart rigidity and plastic deformity to the shape-retaining element, a stretching process is required to be intervened in the production process.

In order to include such a stretching process, equipment for stretching such as a stretching roll has come to be required. In addition, the production process becomes complicated, and as a result, a reduction in production cost has become a problem to be solved.

The present invention has been made in view of the above-mentioned problems, and provides a shape-retaining tape and a zipper tape that can be produced only by an extrusion molding process without including a stretching process, and can retain a package bag with its opening part being in the opened state, and a package bag provided with these tapes.

### Means for Solving the Problems

In order to attain the above-mentioned object, the shape-retaining tape of the present invention is formed of a resin composition obtained by adding 0.1 to 40 parts by weight of an inorganic filler relative to 100 parts by weight of a high-density polyethylene resin.

The zipper tape of the present invention is a zipper tape having an engagement part in which a protruded male part and a recessed female part are engaged with each other, wherein a shape-retaining part comprising a resin composition obtained by adding 0.1 to 40 parts by weight of an inorganic filler is added relative to 100 parts by weight of a high-density polyethylene resin is provided in the tape-length direction.

The zipper tape of the present invention is a zipper tape having an engagement part in which a protruded male part and a recessed female part are engaged with each other, wherein at least one of the male part, a belt-like base part in which the male part is extended, the female part and a belt-like base part in which the female part is extended is formed of a resin composition obtained by adding 0.1 to 40 parts by weight of an inorganic filler relative to 100 parts by weight of a high-density polyethylene resin.

The package bag of the present invention is a package bag having an opening part from which contents can be taken out and the shape-retaining tape of the present invention or the zipper tape of the present invention is attached to the opening part.

The method for producing a shape-retaining tape of the present invention is a method in which a resin composition obtained by adding 0.1 to 40 parts by weight of an inorganic filler relative to 100 parts by weight of a high-density polyethylene resin is subjected to extrusion molding without including a stretching process.

The method for producing a zipper tape of the present invention is a method for producing a zipper tape having an engagement part in which a protruded male part and a recessed female part are engaged each other, and a shape-retaining part formed of a resin composition obtained by adding 0.1 to 40 parts by weight of an inorganic filler relative to 100 parts by weight of a high-density polyethylene resin is provided along the tape-length direction, wherein a resin composition forming the engagement part and a resin composition forming the shape-retaining part are subjected to co-extrusion molding to produce the engagement part and the shape-retaining part without including a stretching process.

The method for producing a zipper tape of the present invention is a method for producing a zipper tape having an engagement part in which a protruded male part and a recessed female part are engaged each other, and at least one of the male part, a belt-like base part in which the male part is extended, the female part and a belt-like base part in which the female part is extended is formed of a resin composition obtained by adding 0.1 to 40 parts by weight of an inorganic filler relative to 100 parts by weight of a high-density polyethylene resin, wherein the resin composition forming the engagement part and a resin composition forming the belt-like base part are subjected to extrusion molding to produce the engagement part and the belt-like base part without including a stretching process.

### Advantageous Effects of the Invention

According to the present invention, since a shape-retaining tape or a zipper tape provided with a shape-retaining part can be produced only by an extrusion molding process without including a stretching process, as compared with the production by conventional processes, improvement in production efficiency and reduction in cost can be realized.

### Brief Description of the Drawings

FIG. 1 is a schematic oblique view showing an appearance of the shape-retaining tape according to one embodiment of the present invention;
FIG. 2 is a schematic oblique view showing an appearance of the zipper tape according to one embodiment of the present invention in which a shape-retaining part is provided on one side along the tape-length direction, in which (a) is a view showing an embodiment in which no punching hole is formed in the shape-retaining part and (b) is a view showing an embodiment in which punching holes are formed in the shape-retaining part;
FIG. 3 is a schematic oblique view showing an apparatus of the zipper tape according to one embodiment of the present invention in which a shape-retaining part is provided on the both sides along the tape-length direction;
FIG. 4 is a front view which diagrammatically shows a package bag according to one embodiment of the present invention;
FIG. 5 is a view which diagrammatically shows a verification process that verifies the shape-retaining property of an opening part in a package bag according to one embodiment of the present invention, in which (a) is a view showing a compression process by means of a compression testing machine and (b) is a view showing the process of measuring the dimension of the opening part after leaving for a prescribed period of time after unloading; and
FIG. 6 is a table showing the results of verification of the shape-retaining property of an opening part in a package bag according to one embodiment of the present invention.

### Mode for Carrying out the Invention

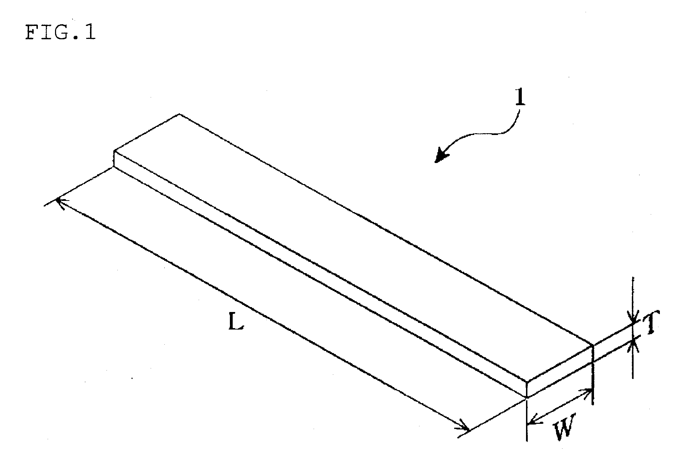

Hereinbelow, an explanation will be made with reference to FIGs. 1 to 6 on a shape-retaining tape 1 according to one embodiment of the present invention, a zipper tape 2 (2A, 2B and 2C) according to one embodiment of the present invention, a method for producing them, and a bag body 100 provided with these tapes 1 and 2.

### [Shape-retaining tape]

As shown in FIG. 1, the shape-retaining tape 1 according to one embodiment of the present invention is a resin-made tape formed in the shape of a belt (tape length: L) having a square (tape width W × tape thickness T) cross section.

Specifically, this shape-retaining tape is formed of a resin composition obtained by adding 0.1 to 40 parts by weight (i.e. 0.1 part by weight or more and 40 parts by weight or less) of an inorganic filler relative to 100 parts by weight of high-density polyethylene resin. Due to the addition of this inorganic filler, rigidity and shape-retaining property are imparted to the tape itself.

If the amount of the inorganic filler is less than 0.1 part by weight relative to 100 parts by weight of the high-density polyethylene resin, the shape-retaining property of the shape-retaining tape is not fully exhibited, and if the amount of the inorganic filler exceeds 40 parts by weight relative to 100 parts by weight of the high-density polyethylene resin, fluidity may be deteriorated to lower the viscosity, and the resin composition becomes brittle, thereby causing the extrusion molding for producing the shape-retaining tape to be difficult.

The amount of the inorganic filler relative to 100 parts by weight of the high-density polyethylene resin is preferably 3 to 30 parts by weight.

For this inorganic filler, one or two or more can be selected from the group consisting of talc, mica, calcium carbonate, magnesium carbonate, magnesium oxide and a nucleating agent (crystallization promoter).

Of the above-mentioned group, talc is preferable as the inorganic filler to be added.

Further, if an inorganic nucleating agent is added in addition to talc, shape-retaining property is improved. No specific restrictions are imposed on the type of the inorganic nucleating agent, and it is preferable to use a nucleating agent for polyethylene, for example.

By adding 0.1 to 40 parts by weight of such inorganic filler relative to 100 parts by weight of the high-density polyethylene resin, unlike a conventional process of producing a shape-retaining tape, without including a stretching process, shape retaining can be attained easily by imparting rigidity to and removing elasticity from the high-density polyethylene resin.

As a result, the shape-retaining tape 1 can exhibit its performance as a shape-retaining element that is deformable upon application of an external force and is capable of retaining its deformed shape. By attaching this tape to a resin film or the like, the resin film can be retained in a predetermined shape.

In order to allow its shape-retaining property to be exhibited effectively, it is preferred that the shape-retaining tape have a cross section of 1.4 mm² or more, preferably 2.4 mm² or more.

The cross-sectional shape thereof is not limited to square, it may be circular, diamond, rectangulr-oblong, trapezoidal, square, semicircular or the like, and can be appropriately selected according to application and use circumstances.

If the shape-retaining tape 1 according to this embodiment is used in order to retain the shape of a resin film, the shape-retaining tape and the resin film are bonded by fusing the shape-retaining tape 1 to the resin film. In this case, the adhesion force of these in the fusing surface is required to be improved.

In such a case, a resin layer (if the resin film is made of a polyolefin-based resin, a polyolefin-based resin of the similar quality) having good compatibility with the resin film can be stacked on at least one side of the shape-retaining tape 1.

The shape-retaining tape 1 exhibiting such a function can be produced by an extrusion molding process in which a resin composition having the above-mentioned weight ratio is extruded in the form of a belt through an extrusion die.

As mentioned above, only by adding an inorganic filler to a high-density polyethylene resin, rigidity and shape-retaining property can be imparted to the shape-retaining tape 1. Therefore, in this production process, the shape-retaining tape 1 can be produced without including a stretching process unlike the conventional process of producing a shape-retaining tape.

In this way, as compared with the production by the conventional process, the production efficiency can be improved and the production cost can be decreased.

For the extrusion molding, in addition to the known single-layer or multi-layer profile extrusion, a method in which a resin layer having a high melting point is stacked on a resin layer having a low melting point by extrusion, a method in which layer stacking is conducted by an extrusion laminating method or a dry laminating method or the like can be used.

### [Zipper tape]

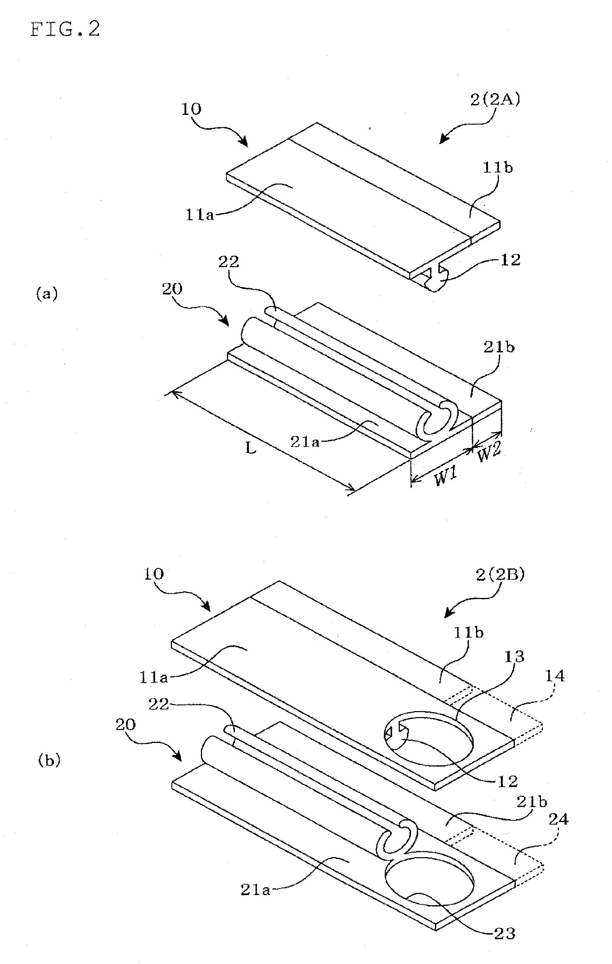

In zipper tapes 2 (2A, 2B, 2C) according to one embodiment of the present invention, as shown in FIGs. 2 to 4, shape-retaining parts (11 b, 21 b) formed of the resin composition which is the same as that of the above-mentioned shape-retaining tape 1 are integrally provided along the length (L) direction of the zipper tape formed of a male-side tape 10 and a female-side tape 20.

Specifically, the zipper tapes 2 are respectively formed of a polyethylene resin such as low-density polyethylene or the like, and is formed of the male-side tape 10 in which the male part is integrally extended in a male-side belt-like base 11a and a female-side tape 20 in which the female part 22 is integrally extended in a female-side belt-like base 21a.

The male part 12 has an appropriate spade-like shape and the female part 22 has a recessed cross section, and they constitute an engagement part in which the female part 22 and the male part 12 are engaged with each other.

The male-side belt-like base part 11a and the female-side belt-like base part 21a respectively have the shape-retaining parts 11b and 21b being fused in the end part in its width direction thereof.

Due to such a configuration, the zipper tape 2 according to this embodiment is provided with the male part 12 and the female part 22 extended in the form of a projection and a recession, respectively. Therefore, although it has property that it is easily returned to its original linear state even if the tape itself is bent, the shape-retaining parts 11b and 21 b act to prevent the restoration to the original linear state.

That is, as in the case of the above-mentioned shape-retaining tape 1, the shape-retaining parts 11b and 21b are respectively formed such that the elasticity is lost while rigidity is imparted, whereby the shape-retaining property can be maintained easily. If an external force is applied to the zipper tape 2 itself to allow it to be deformed (bent), although the male-side belt-like base part 11a and the female-side belt-like base part 21 a show the signs of restoration, the shape-retaining parts 11b and 21b act to prevent such restoration, whereby the deformed shape can be retained.

By attaching the zipper tape 2 exhibiting such shape-retaining property along the opening part of a package bag, the opening part can be retained in the opened state while exhibiting the intrinsic function of the zipper tape, i.e. the opening part is openably and closably sealed.

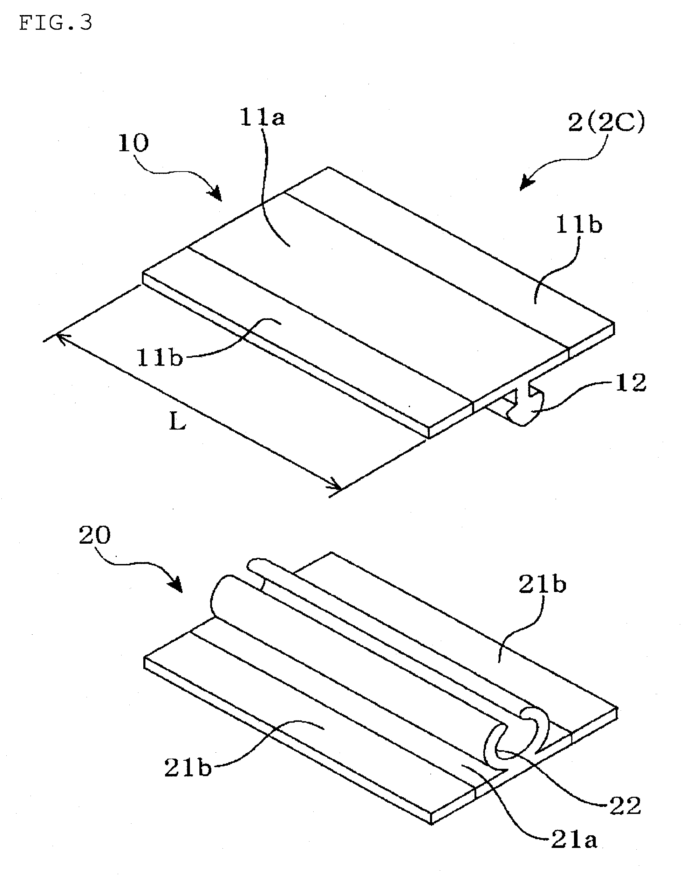

As shown in FIG. 2 and FIG. 3, the shape-retaining parts 11b and 21b can be provided at an arbitral position on one side or the both sides along the tape-length direction.

In this case, if the tape width W and the tape thickness T of the male-side belt-like base part 11a and the female-side belt-like base part 21a are the same as those of the shape-retaining part 11b and the shape-retaining part 21 b, as compared with a zipper tape 2A and 2B in which the shape-retaining parts 11 b and 21b are provided on one side, a zipper tape 2C in which the shape-retaining parts 11b and 21b are provided on the both sides, the deformed shape can be retained stably. That is, the shape-retaining property can be improved when the shape-retaining parts 11 b and 21 b are provided in a plurality of rows.

The shape-retaining parts 11b and 21b are provided not only on one side or the both sides of the male-side belt-like base part 11a and the female-side belt-like base part 21a, they may be stacked or built-in (buried) in the male-side belt-like base parts 11a and the female-side belt-like base part 21a.

Further, although the shape-retaining parts 11b and 21b are provided on the both sides of the male-side belt-like base part 11a and the female-side belt-like base part 21 a, they may be provided on one of the male-side belt-like base part 11a and the female-side belt-like 21 a.

Further, as in the case of the zipper tape 2B shown in FIG. 2(b), punching holes 13 and 23 formed by punching part of the male part 12 and the female part 22 and punching holes 14 and 24 formed by punching part of the shape-retaining parts 11b and 21b may be formed.

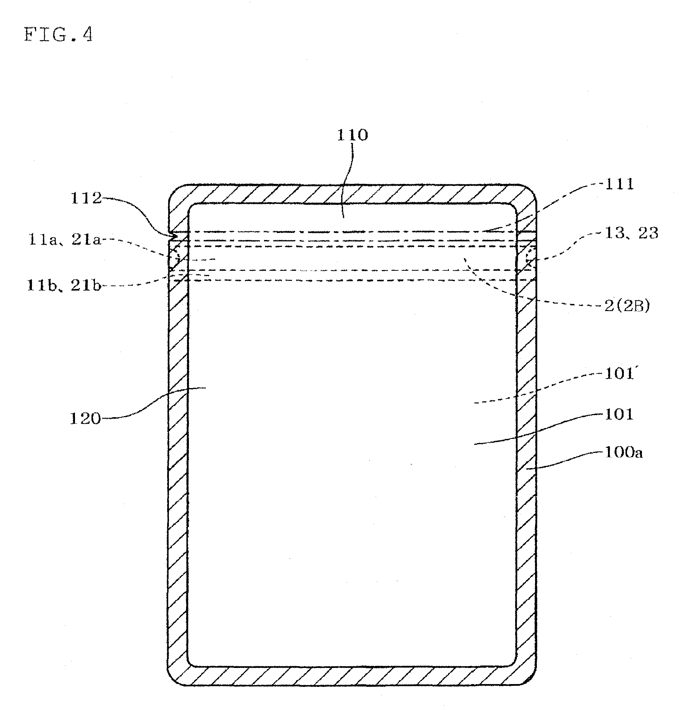

By forming such punching holes 13, 23, 14 and 24, when attaching the zipper tape 2B to a package bag 100, by providing the punching holes 13, 23, 14 and 24 in correspondence with a side seal part 100a of the package bag 100 (see FIG. 4), the following functions and effects are exhibited.

In the case of a common zipper tape that does not have punching holes 13, 23, 14 and 24, in the side seal part 100a, in order to crimp the male part 12 and the female part 22 in order to prevent contents from being leaked from parts corresponding thereto, these parts are required to be crimped by means of an excessive amount of an adhesive resin. Further, there is a problem that an excessive adhesive resin is flown into the bag.

As in this embodiment, by providing punching holes 13, 23, 14 and 24 in correspondence with the side-seal part 100a of the package bag 100, the amount of the adhesive resin can be reduced, and flowing of the adhesive resin into the bag can be prevented.

The above-mentioned preferable embodiment that is applied to the shape-retaining tape 1 can be applied to the shape-retaining parts 11b and 21b as it is.

That is, the type of a preferable inorganic filler to be added (e.g. talc and nucleating agent), the weight amount ratio thereof, a preferable cross-section, stacking of a resin layer having compatibility, or the like are also applied to the shape-retaining parts 11b and 21 b.

For one of belt-like base parts, i.e. the male-side belt-like base part 11a and the female-side belt-like base part 21a, is preferably formed of a polyolefin-based resin composition. In particular, in order to improve integrity with the shape-retaining parts 11b and 21b and adhesiveness with the inner peripheral surface of the opening part, it is preferable to use low-density polyethylene, linear low-density polyethylene or high-density polyethylene each have good compatibility therewith.

Further, the zipper tape 2 having such a configuration can be produced by the so-called co-extrusion in which a resin composition constituting the male-side tape 10 (part of a male-side engagement part formed of the male-side belt-like base part 11 a and the male part 12), a resin composition constituting the female-side tape 20 (part of a female-side engagement part formed of the female-side base part 21a and the female part 22), and a resin composition constituting the shape-retaining parts 11 b and 21 b are simultaneously extruded.

As mentioned above, in order to form the shape-retaining parts 11b and 21b, only by co-extruding a resin composition obtained by adding an inorganic filler to a high-density polyethylene resin together with a resin composition forming the male-side tape 10 and the female-side tape 20, it is possible to impart the rigidity and the shape-retaining property to the zipper tape 2. Therefore, in the production process, unlike conventional processes, the zipper tape 2 having shape-retaining property can be produced without including a stretching process after an extrusion process.

As a result, as compared with the case where the conventional zipper tape provided with the shape-retaining elements are produced, the production efficiency can be improved and the production cost can be reduced.

For co-extrusion, in addition to a known single-layer or multi-layer profile molding, a method in which a resin layer having a high melting point is stacked on a resin layer having a low melting point by extrusion, a method in which layer stacking is conducted by an extrusion laminating method or a dry laminating method or the like can be used.

### [Package bag]

An explanation will be made below on an example in which the shape-retaining tape 1 and the zipper tape 2 (2A, 2B, 2C) having the above-mentioned shape-retaining property is attached to the opening part of a package bag formed of a resin film or the like.

In this embodiment, an example is given in which the shape-retaining tape 1 and the zipper tape 2B of the zipper tape 2 (2A, 2B, 2C) are attached to a package bag made of a polyolefin-based resin as a resin film.

FIG. 4 is a front view diagrammatically showing the package bag 100 provided with the zipper tape according to this embodiment.

This package bag 100 is formed in the form of a flat pouch-type bag that is obtained by heat sealing the peripheral edge (indicated by hatching) of films 101 and 101' made of a polyolefin resin.

In the package bag 100, the opening 110 that is opened in order to take contents out and an accommodating part 120 for accommodating contents are formed. The zipper tape 2B according to the present invention is thermally adhered (fused) to the inner peripheral surface of the opening 110 by means of a thermal pressing machine or the like.

At least an inner layer of the films 101 and 101' is formed of a resin that has compatibility (thermal adhesiveness) with the shape-retaining tape 1 and the zipper tape 2, e.g. low-density polyethylene, linear low-density polyethylene, high-density polyethylene, an ethylene/α-olefin copolymer, an ethylene/vinyl acetate copolymer, an ethylene/acrylic acid copolymer, an ethylene/acrylic acid ester copolymer, an amorphous polyethylene terephthalate (PET), polypropylene or its copolymer, or the like.

In the opening part 110, a notched part 112 and a cut tape 11 (indicated by the dashed line) attached to the inner surface thereof are provided for facilitating the opening.

The zipper tape 2B is provided at a position lower than the cut tape 111 and along the side seal part 100a at the both ends. The male-side tape 10 and the female-side tape 20 are respectively provided on the film 101 and the film 101', and the male part 12 and the female part 22 are opposed such that they can be engaged with each other.

In this embodiment, the zipper tape 2B is attached such that the shape-retaining parts 11b and 21 b are positioned to the side of the accommodation part 120. However, it may be attached such that the shape-retaining parts are positioned on the side of the opening part 110.

By attaching the zipper tape 2B, simultaneously with the engagement or the cancellation of the engagement of the male part 12 and the female part 22, the opening part 110 can be openable and closable.

Further, since the zipper tape 2B has the above-mentioned shape-retaining property, the opening part 110 of the package bag 100 can be retained in the opened state.

Specifically, by tearing the films 101 and 101' along the cut tape 111 from the notch part 112, the opening part 110 is allowed to be in the openable state. Further, the opening part 110 is grasped and an external force is applied such that the film 101 and the film 101' are separated, the engagement of the male part 12 and the female part 22 are cancelled, whereby the opening part 110 is allowed to be in the opened state.

At this time, since the shape-retaining parts 11b and 21b act to prevent restoration to the closed state, the opening part 110 can be retained in the opened state, whereby contents can be taken out smoothly.

### [Verification of the shape-retaining property]

In order to confirm the shape-retaining property, i.e. the shape-retaining property of the opening part in the package bag 110, the following verification was conducted.

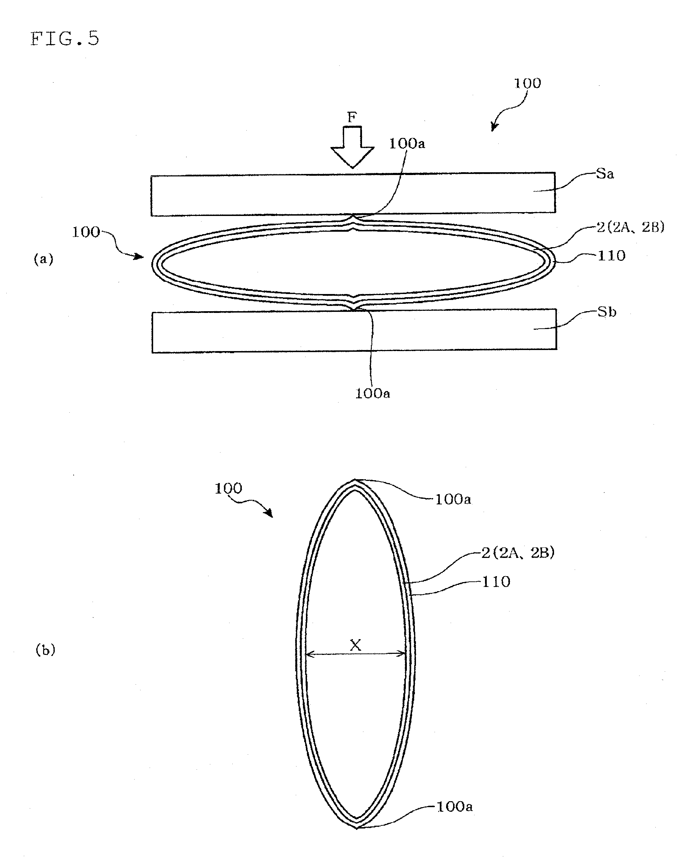

Specifically, as shown in each figures in FIG. 5, the package bag 100 is compressed by applying a prescribed external force (for example, 40N for one minute) by means of a compression testing machine S from the direction of the side seal part 100a (see FIG. 5 (a)), and after unloading, the dimension X of the opening part after leaving for 1 minute was measured (see FIG. 5 (b)), whereby the shape-retaining property was verified.

Further, moldability at the time of extrusion molding was verified.

The verification was conducted as follows. The weight ratio of an inorganic filler (talc, nucleating agent) to be added relative to 100 parts by weight of high-density polyethylene, the cross-section of each of the shape-retaining parts 11b and 21b and presence and absence of punching holes 13, 23, 14 and 24 were used as variable parameters, and the zipper tape 2A (no punching hole in the shape-retaining part) and the zipper tape 2B (punching holes are formed in the shape-retaining part) were formed by combining a plurality of these parameters. Then, by using the package bag 100 in which these tapes were attached, verification was conducted.

As for the evaluation of the shape-retaining property, a dimension X of the opening part of 35 mm or more is evaluated as "A", a dimension X of the opening part of 25 mm or more is evaluated as "B", a dimension X of the opening part of 15 mm or more is evaluated as "C", and a dimension X of the opening part of less than 15 mm is evaluated as "D". A larger dimension X of the opening part means good shape-retaining property.

As for the evaluation of moldability, a case where extrusion molding was conducted easily is evaluated as "A", a case where extrusion molding was difficult is evaluated as "B", and a case where extrusion molding was impossible is evaluated as "C".

Based on the verification results of evaluation of the shape-retaining property, a product having the most excellent product value is evaluated as "A", a product having good product value is evaluated as "B", a product having normal product value is evaluated as "C" and a product having no product value is evaluated as "D".

The verification was conducted by using, as the resin composition forming the zipper tape (a part of the male-side engagement part and the female-side engagement part), low-density polyethylene manufactured by Tosoh Corporation [product name: TZ420A, density 913 kg/m³], as the high-density polyethylene of the resin composition forming the shape retaining part, high-density polyethylene manufactured by Japan Polyethylene Corporation [product name: HJ362N, density 953 kg/m³], as the inorganic filler (talc) of the resin composition forming the shape-retaining part, an inorganic filler manufactured by Lion Idemitsu Composites, Co., Ltd. [product name: HMP460-1, specific gravity: 1.55], and as the inorganic filler (nucleating agent) of the resin composition forming the shape-retaining part, an inorganic filler manufactured by Riken Vitamin Co., Ltd. (product name: Rikemaster-CN-002]. Regarding the tape width (W1=7 mm, W2=3 mm: see FIG. 2(a)) of the zipper tape and the shape-retaining tape, the widths of the package bag (raw material: PET) and the opening part 110 (160 mm), the verification was conducted under the same conditions.

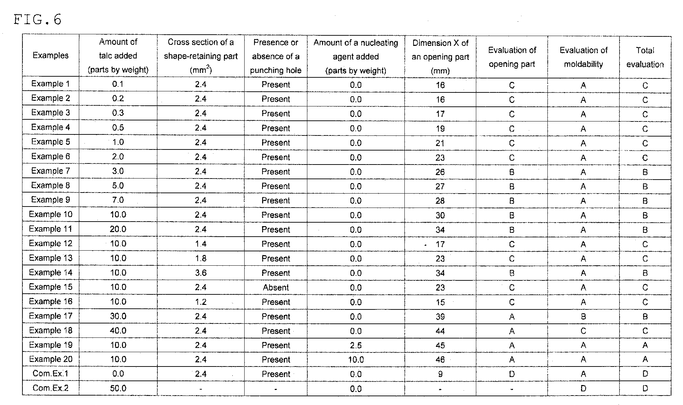

The results of the verification are shown in FIG. 6.

Examples 1 to 20 and Comparative Example 1 show examples in which the cross sections of the shape-retaining parts 11b and 21b were 1.2 mm² or more and the amount of talc added was different. When Examples 1 to 20 and Comparative Example 1 are compared, in Examples 1 to 20 when talc was added in an amount that is equal to or larger than the lower limit value of the range of the invention (0.1 part by weight of talc relative to 100 parts by weight of high-density polyethylene), the dimension X of the opening part of 15 mm or more was ensured. In Comparative Example 1 in which no talc was added, even if the cross section is 2.4 mm² or more, a sufficient dimension X of the opening part could not be obtained.

Examples 1 to 11, 15, and 17 to 20 show examples in which the cross sections of the shape-retaining parts 11b and 21 b were the same (2.4 mm²) and the amount of talc added was different. When comparing these Examples, it can be understood that the dimension X of the opening part was increased with an increase in the amount of talc.

In particular, in Examples 7 to 11 in which 3 parts by weight or more of talc was added relative to 100 parts by weight of high-density polyethylene, the dimension X (26 to 34 mm, for example) of the opening part was greater as compared with Examples 1 to 6.

Examples 10 and 16 show examples in which the amount of talc added was the same (10 parts by weight) and the cross sections of the shape-retaining parts 11b and 21b were 1.4 mm² or more and less than 1.4 mm², respectively. When these Examples are compared, it can be understood that a larger dimension X of the opening part could be obtained when the cross section was 1.4 mm² or more (Example 10).

Further, Examples 12 to 16 show examples in which the amount of talc added was the same (10 parts by weight) and the cross sections of the shape-retaining parts 11b and 21b were different. When these Examples are compared, it can be understood that a larger dimension X of the opening part could be obtained with an increase in cross section of the shape-retaining parts 11 b and 21 b.

Further, Examples 10 and 15 show examples in which the amount of talc was the same and the cross sections of the shape-retaining parts 11b and 21b were the same (2.4 mm²), but presence and absence of punching holes in the shape-retaining parts 11b and 21b differed. When these Examples are compared, it can be understood that one having a punching hole (Example 10) had a larger dimension X of the opening part as compared with one having no punching hole.

Examples 1 to 18 and Examples 19 and 20 show examples that differed in whether a nucleating agent was added or not. When these Examples are compared, it can be understood that a larger dimension X of the opening part could be obtained when a nucleating agent was added (Examples 19 and 20), as compared with a case when no nucleating agent was added.

Further, Examples 19 and 20 show the examples in which a nucleating agent was added, but the amount thereof was different. When these Examples are compared, it can be understood that the dimension X of the opening part was increased with an increase in the amount of a nucleating agent.

In Comparative Example 2, the fluidity was deteriorated and the viscosity was lowered at the time of thermal melting, and hence the resin film became brittle. As a result, the resin film could not be molded at a normal extrusion pressure, and hence, the zipper tape could not be produced. It can be understood that addition of talc in an amount exceeding 40 parts by weight relative to 100 parts by weight of high-density polyethylene results in lowering of production efficiency and hence, is not preferable.

From the above-mentioned results of verification, the following can be understood: if the cross section of each of the shape-retaining parts 11b and 21 b is 1.4 mm² or more and talc is added in an amount larger than the range of the present invention (0.1 parts by weight or more), the zipper tape 2 exhibits shape-retaining property which is enough to retain the opening part 110 in the opened state; the shape-retaining property is improved with an increase in the amount of talc added; the shape-retaining property is improved with an increase in cross section of the shape-retaining part; the shape-retaining property is improved by the formation of a punching hole in the shape-retaining part as compared with the case where no punching hole is provided; the shape-retaining property is improved by the addition of a nucleating agent as compared with the case where no nucleating agent is added; the shape-retaining property is improved with an increase in the amount of a nucleating agent to be added; and the shape-retaining property is improved by the addition of both talc and a nucleating agent.

As explained above, the shape-retaining tape 1 and the zipper tape 2 (2A, 2B, 2C) of this embodiment can be produced only by extrusion molding without using a stretching process. Accordingly, as compared with production by conventional methods, the production efficiency can be improved and the production cost can be reduced.

In addition, by attaching these tapes 1 and 2 to the resin film, the resin film can be retained in a prescribed shape. In particular, by attaching these tapes to the opening part of a package bag, the bag can be retained in the state with the opening part being opened, whereby contents of the package bag can be taken out smoothly.

Hereinabove, the present invention is explained with reference to the embodiments. It is, however, needless to say the present invention is not limited to the above-mentioned embodiments, and various modifications are possible within the scope of the invention.

For example, the package bag 100 in the above-mentioned embodiment is a flat pouch bag body. However, a bag body in the form of a standing pouch can be used.

In the package bag 100 of the above-mentioned embodiment, the zipper tape B was attached to the inner peripheral surface. However, any of the zipper tapes 2A and 2C may be attached.

In the package bag 100 of the above-mentioned embodiment, the zipper tape attached to the inner peripheral surface was taken as the zipper tape B. However, the shape-retaining tape 1 can be attached to the inner peripheral surface of the opening part 110 of the package bag 100 by similar means (thermal melting by means of a thermal pressing machine, or the like) to that used for attaching the zipper tape 2B. In this case, only the shape-retaining tape 1 may be attached, or a common zipper tape (no shape-retaining part) may be attached together with the shape-retaining tape 1 along the length direction of the shape-retaining tape 1.

In the zipper tape 2, the shape-retaining part was formed in both of the male-side tape 10 and the female-side tape 20. However, the shape-retaining part may be formed in only one of these tapes.

In the zipper tape 2, the male part 12, the female part 22, the male-side belt-like base part 11a and the female-side belt-like base part 21 a were formed of a resin composition that was different from the resin composition forming the shape-retaining parts 11band 21 b, but they may be formed of the same resin composition.

That is, the zipper tape 2 may have a configuration in which at least one of the male part 12, the female part 22, the male-side belt-like base part 11a and the female-side belt-like base part 21a is formed of a resin composition obtained by adding 0.1 to 40 parts by weight of an inorganic filler relative to 100 parts by weight of a high-density polyethylene resin.

Due to such a configuration, any one of the male part 12, the female part 22, the male-side belt-like base part 11a and the female-side belt-like base part 21a functions as the shape-retaining parts 11b and 21b themselves, and elasticity is lost while rigidity being imparted, whereby the shape-retaining property can be kept easily. Therefore, when the zipper tape 2 itself is deformed (bent) by the application of an external force, it acts to prevent restoration, whereby the deformed shape can be retained.

In this case, the shape-retaining parts 11b and 21b may or may not be provided. A preferable inorganic filler (talc and a nucleating agent, for example) and the amount thereof (by weight), a preferable cross section, stacking of a compatible resin layer or the like applied to the shape-retaining parts 11b and 21b can also be applied to the male part 12, the female part 22, the male-side belt-like base part 11a and the female-side belt like part 21a.

When producing the zipper tape 2 mentioned above, when the engagement part (the male part 12 and the female part 22) and the belt-like base part (the male-side belt-like base part 11a and the female-side belt-like base part 21a) are formed of different resin compositions (that is, when either one of the engagement part or the belt-like base part is formed of a resin composition obtained by adding 0.1 to 40 parts by weight of an inorganic filler relative to 100 parts by weight of a high-density polyethylene resin), these different resin compositions are subjected to co-extrusion, whereby the engagement part and the belt-like base part can be produced without including a stretching process.

On the other hand, when the engagement part (the male part 12 and the female part 22) and the belt-like base part (the male-side belt-like base part 11a and the female-side belt-like base part 21a) are formed of the same resin composition (that is, when either one of the engagement part or the belt-like base part is formed of a resin composition obtained by adding 0.1 to 40 parts by weight of an inorganic filler relative to 100 parts by weight of a high-density polyethylene resin), one resin composition is simply subjected to extrusion molding, whereby the engagement part and the belt-like base part can be produced simultaneously without including a stretching process.

As mentioned above, in each case, the engagement part and the belt-like base part can be produced simultaneously only by extrusion molding without including a stretching process.

### Industrial Applicability

The present invention can be applied to a shape-retaining element that retains the opening part in the opened state of a package bag accommodating contents formed of a solid or a fluid, for example, foodstuffs such as groceries, beverage and enteral feeding formula or non-foodstuffs such as detergents and stationary. The present invention can also be applied to a distribution cable, a curve ruler or the like, taking advantage of its intrinsic property of being deformed freely.

### Description of Reference Numerals

- 1: Shape-retaining tape
- 2: (2A, 2B, 2C) Zipper tape
- 10: Male-side tape
- 11a: Male-side belt-like base part
- 11b: Shape-retaining part
- 12: Male part
- 13, 14, 23, 24: Punching hole
- 20: Female-side tape
- 21a: Female-side belt-like base part
- 21b: Shape-retaining part
- 22: Female part
- 100: Package bag
- 100a: Side seal part
- 101: Film
- 110: Opening part
- 120: Accommodating part

## Claims

1. A shape-retaining tape comprising a resin composition obtained by adding 0.1 to 40 parts by weight of an inorganic filler relative to 100 parts by weight of a high-density polyethylene resin.

2. The shape-retaining tape according to claim 1, wherein the inorganic filler is one or two or more selected from talc, a nucleating agent, mica, calcium carbonate, magnesium carbonate and magnesium oxide.

3. A zipper tape having an engagement part in which a protruded male part and a recessed female part are engaged with each other, wherein a shape-retaining part comprising a resin composition obtained by adding 0.1 to 40 parts by weight of an inorganic filler relative to 100 parts by weight of a high-density polyethylene resin is provided along the tape-length direction.

4. A zipper tape having an engagement part in which a protruded male part and a recessed female part are engaged with each other, wherein at least any one of the male part, a belt-like base part where the male part is extended, the female part, and a belt-like base part where the female part is extended comprises a resin composition obtained by adding 0.1 to 40 parts by weight of an inorganic filler relative to 100 parts by weight of a high-density polyethylene resin.

5. The zipper tape according to claim 3 or 4, wherein the inorganic filler is one or two or more selected from talc, a nucleating agent, mica, calcium carbonate, magnesium carbonate and magnesium oxide.

6. A package bag having an opening part from which contents can be taken out, wherein the shape-retaining tape according to claim 1 or 2 or the zipper tape according to any one of claims 3 to 5 is attached to the opening part.

7. A method for producing a shape-retaining tape wherein a resin composition obtained by adding 0.1 to 40 parts by weight of an inorganic filler relative to 100 parts by weight of a high-density polyethylene resin is subjected to extrusion molding without including a stretching process.

8. A method for producing a zipper tape having an engagement part in which a protruded male part and a recessed female part are engaged with each other, and a shape-retaining part comprising a resin composition obtained by adding 0.1 to 40 parts by weight of an inorganic filler relative to 100 parts by weight of a high-density polyethylene resin is provided along the tape-length direction, wherein a resin composition forming the engagement part and a resin composition forming the shape-retaining part are subjected to co-extrusion molding, whereby the engagement part and the shape-retaining part are produced simultaneously without including a stretching process.

9. A method for producing a zipper tape having an engagement part in which a protruded male part and a recessed female part are engaged with each other, and at least one of the male part, a belt-like base part where the male part is extended, the female part, and a belt-like base part where the female part is extended comprises a resin composition obtained by adding 0.1 to 40 parts by weight of an inorganic filler relative to 100 parts by weight of a high-density polyethylene resin, wherein the resin composition forming the engagement part and the resin composition forming the belt-like base part are subjected to extrusion molding, whereby the engagement part and the belt-like base part are produced simultaneously without including a stretching process.
